# EUROPÄISCHE PATENTSCHRIFT

(11) **EP 1 091 859 B1**
(45) Veröffentlichungstag und Bekanntmachung des Hinweises auf die Patenterteilung: **24.04.2002**
(21) Anmeldenummer: 99934547.3
(22) Anmeldetag: 30.06.1999
(51) Int. Cl.: B60G 7/02, B62D 29/00, B23K 33/00

(54) **STÜTZE ZUR ABLEITUNG DER ACHSKRÄFTE EINER FAHRZEUGACHSE UND INSBESONDERE EINER LKW-ANHÄNGERACHSE**
SUPPORT FOR DIVERTING THE AXLE LOADS OF A VEHICLE AXLE, ESPECIALLY A LORRY TRAILER AXLE
SUPPORT POUR DEVIER LES FORCES D'UN ESSIEU ET NOTAMMENT D'UN ESSIEU DE REMORQUE DE POIDS LOURD

(30) Priorität: 01.07.1998 EP 98112110
(43) Veröffentlichungstag der Anmeldung: 18.04.2001
(73) Patentinhaber: BPW Bergische Achsen Kommanditgesellschaft, 51674 Wiehl (DE)
(72) Erfinder: EBERT, Jörg, D-50858 Köln (DE); KRIEGESKOTTE, Thomas, D-51580 Reichshof (DE); KOPPLOW, Werner, D-51588 Nümbrecht (DE); MICHELS, Manfred, D-51067 Köln (DE)
(74) Vertreter: Stenger, Watzke & Ring Patentanwälte
(86) Internationale Anmeldenummer: EP9904499
(87) Internationale Veröffentlichungsnummer: WO0001547

(56) Entgegenhaltungen:
- EP-A- 0 178 258
- EP-A- 0 547 583
- EP-A- 0 615 869
- EP-A- 0 773 119
- WO-A-87/04679
- GB-A- 2 257 670
- US-A- 3 215 384
- US-A- 5 337 997
- PATENT ABSTRACTS OF JAPAN vol. 011, no. 034 (M-558), 31. Januar 1987 (1987-01-31) & JP 61 202794 A (NIPPON STEEL CORP), 8. September 1986 (1986-09-08)
- PATENT ABSTRACTS OF JAPAN vol. 011, no. 057 (M-564), 21. Februar 1987 (1987-02-21) & JP 61 219484 A (MITSUBISHI HEAVY IND LTD), 29. September 1986 (1986-09-29)
- PATENT ABSTRACTS OF JAPAN vol. 010, no. 265 (M-515), 10. September 1986 (1986-09-10) & JP 61 088969 A (KOBE STEEL LTD), 7. Mai 1986 (1986-05-07)
- PATENT ABSTRACTS OF JAPAN vol. 1997, no. 01, 31. Januar 1997 (1997-01-31) & JP 08 244654 A (SHOWA ALUM CORP), 24. September 1996 (1996-09-24)

## Beschreibung

Die Erfindung betrifft eine Stütze zur Ableitung der Achskräfte einer Fahrzeugachse und insbesondere einer Lkw-Anhängerachse auf einen statisch übergeordneten Fahrzeug-Längsträger, an dessen. Unterseite die Stütze befestigt ist, wobei die Stütze eine an den Fahrzeugrahmen ansetzbare obere Stimfläche und zwei Seitenwände aufweist.

Bei Achsaggregaten von Fahrzeuganhängern ist es üblich, die Achse an jeder Seite über zwei Punkte gegenüber dem Fahrzeug-Längsträger abzustützen. Hierzu werden an der Unterseite des Fahrzeug-Längsträgers, befestigte Stützen verwendet An der vorderen Stütze ist schwenkbar ein Längslenker gelagert, der mit der Achse verbunden ist und dessen rückwärtiges Ende sich über eine Feder gegen den Fahrzeug-Längsträger abstützt Als Feder wird in der Regel eine Gummibalg-Luftfeder verwendet, die über Verbindungsplatten einerseits mit der Oberseite des Längslenkers und andererseits mit der Unterseite der am Fahrzeug-Längsträger befestigt ist.

Neben den überwiegend eingesetzten Stahlkonstruktionen gibt es auch Stützen, die aus Aluminiumblechen zusammengeschweißt werden. Dort, wo besonders hohe Druck- oder Zugspannungen in der Stütze auftreten, werden zusätzliche Rippenbleche aus Aluminium an den Außenseiten der Stütze angeschweißt, um diese zu verstärken. Auf der einen Seite werden die Aluminiumstützen direkt mit dem Fahrzeugrahmen verschweißt, auf der anderen Seite kann die Stütze im Bereich ihrer oberen Stirnflächen mit Flanschen versehen sein, durch die hindurch Schrauben zur Befestigung der Stütze an der Unterseite des Fahrzeug-Längsträgers hindurchführbar sind.

Bei der Herstellung der bekannten Stütze fällt bei dem Zuschnitt der einzelnen Aluminiumbleche ein großer Verschnitt an. Das Ziehen einer großen Anzahl von Schweißnähten bis zur Fertigstellung der Stütze kann außerdem zu einem Verzug der insgesamt und insbesondere in Relation zu der Belastbarkeit sehr voluminösen und schweren Stütze führen. Die Befestigungsart der Stütze an dem Fahrzeug-Längsträger ist fest vorgegeben, d.h. die Stütze kann entweder so gestaltet sein, daß sie mit dem Längsträger verschweißbar ist, oder sie ist an geeigneter Stelle mit Befestigungslöchem versehen, wodurch eine Verschraubung mit dem Längsträger möglich wird.

Aus der EP 0 773 119 A ist eine aus zwei Aluminium-Platten zusammengesetzte Stütze der eingangs genannten Art bekannt. Die beiden Aluminium-Platten werden zunächst in Form von Halbschalen gebogen und dann entlang der Mittellinie der Stütze miteinander verschweißt. Zur Erzielung einer ausreichenden Festigkeit der Stütze sind noch weitere Schweißarbeiten erforderlich, u. a. werden auf die Seitenflächen der Stütze zusätzliche Aluminiumbleche aufgesetzt und mit der Stützte verschweißt. Zur Erzielung der erforderlichen Querfestigkeit ist ferner ein Querstab vorgesehen, der ebenfalls mit beiden Seitenflächen der Stütze verschweißt werden muß. Infolge dieser vielen Schweißarbeiten ist die Herstellung der Stütze aufwendig und kostspielig. Von Nachteil sind femer die begrenzten Einsatzmöglichkeiten der Stütze, da lediglich vorgesehen ist, daß diese zur Montage unter dem Fahrzeugrahmen mit ihrer oberen Stimfläche von unten gegen den Fahrzeug-Längsträger gesetzt und dann entlang der oberen Stirnfläche mit dem Längsträger verschweißt wird. Alternative Befestigungsarten, z. B. eine Verschraubung der Stütze mit dem Fahrzeugrahmen, bestehen nicht.

Aus der EP 0 615 869 schließlich ist eine aus Stahlguß bestehende Stütze bekannt, die sich seitlich an dem Fahrzeug-Längsträger befestigen läßt Hierzu ist ein nach oben ragender Flansch der Stütze mit Bohrungen versehen, durch die und durch den Fahrzeug-Längsträger sich Schraubbolzen setzen lassen.

Der Erfindung liegt die **Aufgabe** zugrunde, eine Stütze zur Ableitung der Achskräfte einer Fahrzeugachse und insbesondere einer Lkw-Anhängerachse zu schaffen, die sich bei frei wählbarer Befestigungsart durch ein Höchstmaß an Festigkeit bei geringem Gewicht auszeichnet.

Zur **Lösung** wird bei einer Stütze mit den eingangs genannten Merkmalen vorgeschlagen, daß sie ein einstückiges Aluminium-Gußteil mit daran angeformten Anschlußflanschen zur Befestigung unter dem Fahrzeugrahmen ist, wobei sich die an ihren Außenrändem Schweißkanten aufweisenden Anschlußflansche in Einbuchtungen befinden, mit denen die Seitenwände im Übergang zu der oberen Stirnfläche versehen sind.

Die Einbuchtungen führen nicht nur zu einer Versteifung der Stütze, sondem erlauben eine breite Aufstandsfläche der Stütze, da diese genauso breit wie der zur Befestigung dienende Längsträger sein kann, und gleichwohl durch die nach innen versetzten Anschlußflansche auch eine Verschraubung mit dem Längsträger möglich ist. Bei einem Verschweißen der Stütze mit dem statisch übergeordneten Fahrzeug-Längsträger wird eine formschlüssige Anbindung zu den Teilen des Fahrzeugrahmens erreicht. Wahlweise ist auch eine Befestigung der Stütze durch Verschrauben oder Vernieten mit dem Fahrzeug-Längsträger möglich. Unter Verwendung ein- und derselben Stütze hat der Fahrzeughersteller daher die Möglichkeit, sich entweder für die eine oder die andere Befestigungsart zu entscheiden. Eine Lagerhaltung zweier getrennter Stützentypen beim Lieferantenund Fahrzeugbauer wird vermieden, so daß die Erfindung auch logistische Vorteil bietet.

Die Stütze bietet ferner ein optimales Verhältnis zwischen Festigkeit und Gewicht. Bei der Herstellung der Stütze fällt kein Materialverschnitt an, auch Verzugsprobleme werden vermieden.

Vorzugsweise sind die Schweißkanten an sich in Fahrtrichtung erstreckenden Rändern der Anschlußflansche ausgebildet.

Um im Falle einer Befestigung durch Schweißen das Anschweißen der Stütze an dem Längsträger des Fahrzeugrahmens zu erleichtern, sind die Schweißkanten auf jeder Seite der Stütze vorzugsweise durchgehend ausgebildet, wobei sich die Schweißkanten entlang der Außenränder der Anschlußflansche und zusätzlich entlang der zwischen aufeinanderfolgenden Anschlußflanschen liegenden Wandabschnitte der Seitenwände erstrecken. Zur Befestigung der Stütze an dem Längsträger des Fahrzeugrahmens kann daher entlang jeder Seite der Stütze eine einzige, ununterbrochene Schweißnaht gezogen werden.

Um die Biegespannungen bei der Verschraubung bzw. Vemietung mit dem Fahrzeugrahmen gering zu halten, wird in einer weiteren Ausgestaltung der Erfindung vorgeschlagen, daß Ober- und Unterseite jedes Anschlußflansches parallel zueinander sind.

Um ein- und dieselbe Stütze sowohl links wie auch rechts am Fahrzeug verwenden zu können, sind gemäß einer weiteren Ausgestaltung der Erfindung die Seitenwände symmetrisch in Bezug auf die Mittelebene der Stütze gestaltet.

Gemäß einer weiteren Ausführungsform der Stütze ist vorgesehen, daß an deren Seitenwand eine Schweißkante angeformt ist Die Schweißkante dient als Schweißbadstütze, unter deren Verwendung sich z. B. Querträger an den Seitenwänden befestigen lassen, d. h. solche Stützelemente, die z. B. die unter beiden Fahrzeug-Längsträgem angeordneten Stützen miteinander verbinden und auf diese Weise den Fahrzeugrahmen insgesamt versteifen.

Gemäß einer weiteren Ausführungsform der Stütze sind zueinander fluchtende Öffnungen in beiden Seitenwänden vorgesehen, in die Stahlbuchsen eingesetzt sind, die ein Drehlager für die vordere Anlenkung eines mit der Fahrzeugachse verbundenen Längslenkers aufnehmen. Die Stütze nimmt hierbei die horizontalen und vertikalen Kräfte in dem Längslenker auf und leitet diese an den statisch übergeordneten Fahrzeugrahmen weiter.

Vorzugsweise ist der Querschnitt der Stütze, in einer horizontalen Schnittebene betrachtet, U-förmig mit zwei Seitenwänden und einer in Fahrtrichtung weisenden geschlossenen Stirnwand.

Bei der Herstellung der Stütze als Aluminium-Gußteil kann vorzugsweise auf eine Druckgußtechnik zurückgegriffen werden, wie sie von der Ritter Aluminium Gießerei GmbH in Wendlingen am Neckar / Bundesrepublik Deutschland unter der Bezeichnung VACURAL® angeboten wird. Bei diesem Verfahren handelt es sich um ein Vakuum-Druckgießverfahren. Die so gegossenen Aluminium-Gußstücke weisen ein dichteres Gefüge auf und sind deutlich porenärmer als herkömmliche Gußteile. Die Vorteile des Verfahrens beruhen u.a. darauf, daß infolge des Betriebs des Gießverfahrens im Vakuum keine die Qualität mindernden Oxidhäute in das fertige Gußteil gelangen können. Hierzu werden vor Beginn der Metalleinfüllung die Saugrohr-Füllkammer des Spezialofens sowie der Formhohlraum intensiv evakuiert. Qualitätmindernde Gase können dann nicht mehr bis an das Gußteil gelangen.

Ein Ausführungsbeispiel der Erfindung wird nachfolgend anhand der zugehörigen Zeichnungen erläutert. Darin zeigen:
- Fig. 1: in perspektivischer Ansicht eine erfindungsgemäße Stütze;
- Fig. 2: die Stütze nach Fig. 1 in einer Seitenansicht;
- Fig. 3: die Stütze nach Fig. 1 in einer Draufsicht und
- Fig. 4: die Stütze nach Fig. 1 in einer Ansicht gem. IV in Fig. 2, wobei die Stütze im Bereich des Lenkerauges zur besseren Veranschaulichung in einem Ausbruch dargestellt ist

Die dargestellte Stütze ist an der Unterseite des Längsträgers eines Fahrzeugrahmens und insbesondere des Fahrzeugrahmens eines Lkw-Anhängers befestigt. Die Stütze ragt von dem Längsträger nach unten und verfügt dort über Bohrungen 2 zur Aufnahme der Schwenkachse eines Längslenkers. In an sich bekannter Weise ist an dem Längslenker die Achse des Fahrzeuges befestigt, wobei das andere Ende des Längslenkers über eine Luftfeder und gegebenenfalls eine weitere Stütze federnd an dem Längsträger abgestützt ist.

Die Stütze aus einem einteiligen Aluminium-Gußteil wird in einem Vakuum-Druckgießverfahren hergestellt, welches unter der Bezeichnung VACURAL® bekannt ist.

Die Stütze setzt sich aus zwei Seitenwänden 4, 5, einer vorderen Stirnwand 6 sowie einer oberen Stirnfläche 7 zusammen, mit der sich die Stütze an der Unterseite des Längsträgers abstützt. Nach hinten, d. h. in Richtung des Längslenkers, ist die Stütze offen, so daß sich, in einer horizontalen Schnittebene betrachtet, eine im wesentlichen U-förmige Gestalt ergibt.

Die Stütze wird an der Unterseite des Längsträgers des Fahrzeuges durch Verschweißen oder Verschrauben befestigt Hierzu sind im Bereich der oberen Stimfläche 7 der Stütze Schweißkanten 8 an der Stütze angeformt.

Soll die Stütze mit dem Längsträger des Fahrzeuges verschraubt werden, finden hierzu als Anschlußflansche die Flanschflächen 9a, 9b Anwendung. Die Schrauben werden durch zueinander fluchtende Bohrungen in den Flanschflächen einerseits und in dem Längsträger andererseits hindurchgesteckt.

Soll hingegen die Stütze mit dem Längsträger verschweißt werden, wird hierzu entlang der Schweißkanten 8, die sich wiederum entlang den Flanschflächen 9a, 9b erstrecken, mittels eines Aluminium-Schweißverfahrens eine Schweißnaht gezogen, und so eine materialschlüssige Anbindung der Stütze an den Längsträger hergestellt.

Geringfügig unterhalb des vorderen Endes der oberen Stimfläche 7 ist an der Stütze eine Buchse 11 angeformt, die der schwenkbaren Anlenkung eines Stoßdämpfers dienen kann.

An der nach innen weisenden Seitenwand 4 einstückig angeformt ist ein Steg 16. Der Steg 16 steht rechtwinklig von der Seitenwand 4 der Stütze ab und ist entlang seines freien Randes mit einer Schweißkante 17 nach Art einer Schweißbadstütze versehen.

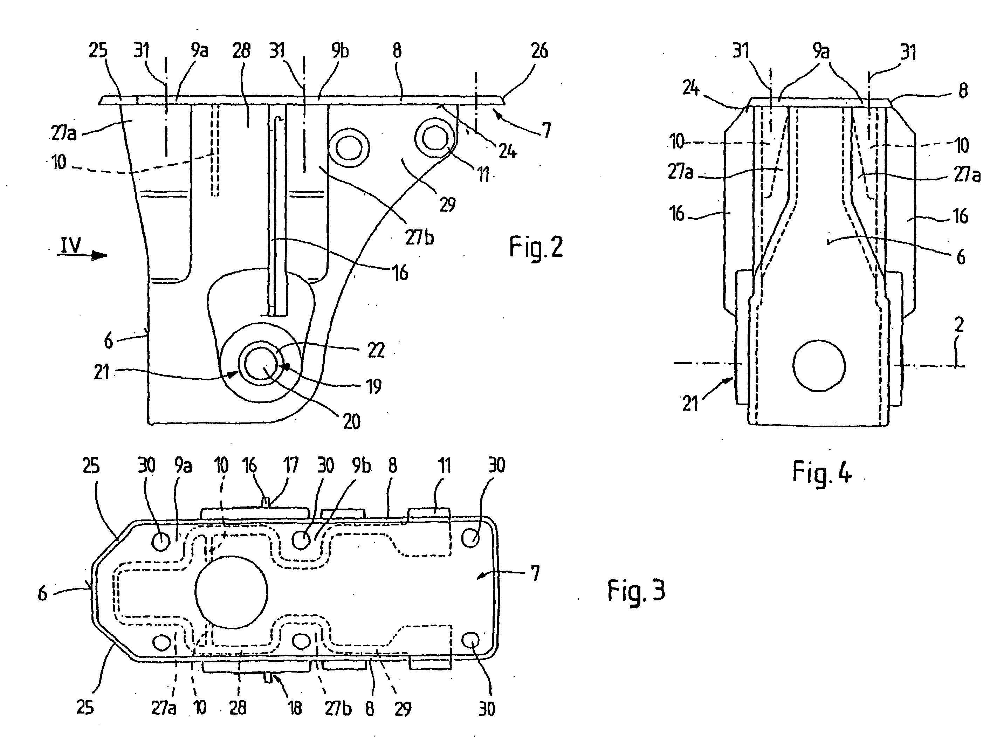

In Fig. 3 ist dargestellt, daß die Schweißkante 17 mit einer angeformten Nut 18 zur Aufnahme der sich beim Schweißen einstellenden Aluminiumschmelze versehen ist. An dem Steg 16 läßt sich ein auf den Zeichnungen nicht dargestellter Querträger anschweißen, der die Stütze mit der jeweils anderen Stütze auf der anderen Fahrzeug-Längsseite verbindet, um so nicht nur die Stützen, sondern den Fahrzeugrahmen insgesamt zu versteifen.

Das Auge 19 zur Aufnahme des Längslenkers befindet sich im unteren Teil der Stütze. Zur Aufnahme des Auges 19 sind die beiden Seitenwände 4, 5 mit zueinander fluchtenden Öffnungen 20 versehen, die sich in Stahlbuchsen 21 befinden. Die Befestigung der Stahlbuchsen 21, die das einzige Fremdteil in der ansonsten einstückigen Aluminiumstütze sind, erfolgt nicht nachträglich, sondern bereits während des Aluminiumgusses. Hierzu werden die vorbereiteten Stahlbuchsen 21 auf geeignete Weise in dem Formraum fixiert, dann der Formraum evakuiert und schließlich die Aluminiumschmelze hineingegeben, die auf diese Weise jede der beiden Stahlbuchsen 21 umschließt Zur Verbesserung der Verbindung sind beide Stahlbuchsen 21 sowohl an ihrer Innenseite als auch an ihrer Außenseite jeweils mit runden Flanschen 22 versehen.

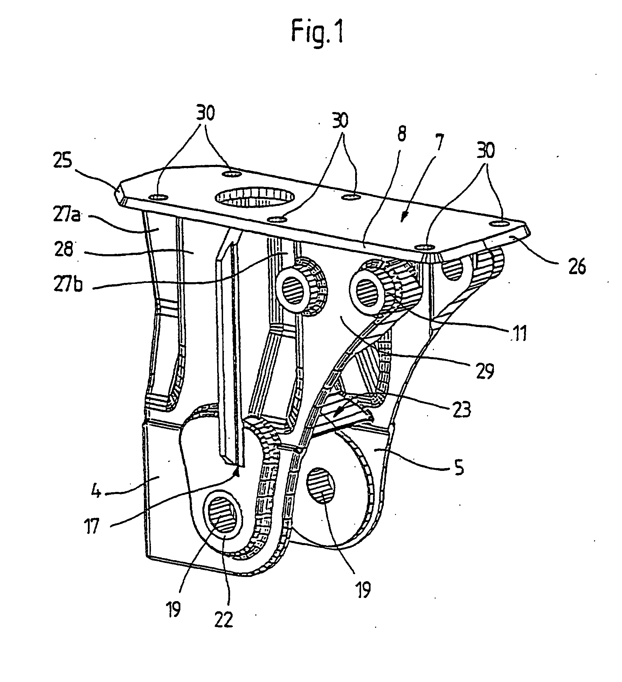

Zusätzlich vorhanden ist eine Strebe 23, welche die beiden Seitenwände 4, 5 verbindet. Auch die Strebe 23 ist im Vakuum-Druckgießverfahren mitgeformt. Die Stütze nach den Fign. 1 bis 4 läßt sich wahlweise durch Verschweißen oder Verschrauben bzw. Vernieten an der Unterseite des Fahrzeugrahmens befestigen. Hierzu sind zumindest die in Längsrichtung verlaufenden Außenränder 24 der oberen Stirnfläche 7 als Schweißkanten 8 ausgebildet Die obere Stirnfläche 7 hat insgesamt in etwa die Form eines Rechteckes, wobei, wie insbesondere Fig. 7 erkennen läßt, die Stimfläche 7 an ihrem vorderen Ende in etwa trapez- bzw. dreieckförmig zulaufen kann. Auch die so gebildeten Schenkel des Trapezes bzw. Dreieckes bilden Schweißkanten 25. Schließlich ist auch der hintere Rand 26 der oberen Stimfläche 7 als Schweißkante nutzbar und entsprechend geformt.

Die obere Stimfläche 7 ist, obwohl integraler Bestandteil der Stütze, wie eine flache Platte geformt. Die beiden Seitenwände 4, 5 der Stütze sind, wie besonders Fig. 3 anhand der darin eingezeichneten gestrichelten Linien erkennen läßt, im Bereich unterhalb der Stirnfläche 7 mit Einbuchtungen 27a, 27b versehen. Die Einbuchtungen bestehen aus Rücksprüngen der Seitenwände 4, 5, wobei sich die Rücksprünge auf beiden Seiten der Stützen auf derselben Länge sowie Höhe befinden. Insbesondere die Fign. 1 und 2 lassen erkennen, daß sich die Einbuchtungen 27a, 27b nicht über die gesamte Höhe der Stütze erstrecken, sondem etwa über die Hälfte oder zwei Drittel der Gesamthöhe der Stütze. Während also die Einbuchtungen 27a, 27b Rücksprünge in den beiden Seitenwänden 4,5 darstellen, liegen der dazwischen angeordnete Wandabschnitt 28 und ferner ein weiterer Wandabschnitt 29 in der normalen Ebene der Seitenwände. Da zudem die Einbuchtungen 27a, 27b als Rücksprünge auch auf die Unterseite der plattenförmigen oberen Stirnfläche 7 treffen, entstehen dort kleine, im wesentlichen rechteckige Anschlußflansche 9a, 9b, die sich gleichsam als Stege quer über die Einbuchtungen 27a bzw. 27b erstrecken. Insofern handelt es sich bei den Anschlußflanschen 9a, 9b um diskrete Teilbereiche der oberen Stirnfläche 7, deren Größe durch die Querschnittsfläche der Einbuchtungen 27a, 27b bestimmt ist

Da der durch die Einbuchtungen gebildete Raum von außen her zugänglich ist, und femer die Anschlußflansche 9a, 9b mit jeweils einer Durchgangsbohrung 30 mit der Mittelachse 31 versehen sind, lassen sich zur Befestigung der Stütze Schrauben oder Nieten durch diese Anschlußflansche 9a, 9b sowie Öffnungen in dem darüberliegenden Fahrzeug-Längsträger hindurchstecken. Um ein Verkanten der Schrauben bzw. Nieten zu vermeiden, sind Ober- und Unterseite der Stirnfläche 7 zumindest im Bereich der Anschlußflansche 9a, 9b parallel zueinander.

Obwohl die beiden Seitenwände 4, 5 wegen der Einbuchtungen 27a, 27b nicht flach gestaltet sind, vielmehr nach Art einer Wellenform von unten an die obere Stimfläche 7 stoßen, ist jede der beiden Schweißkanten 8 durchgehend ausgebildet, d.h. die Schweißkanten 8 erstrecken sich sowohl entlang der Außenränder der Anschlußflansche 9a, 9b, als auch entlang der zwischen den aufeinander folgenden Anschlußflanschen liegenden Wandabschnitte 28 sowie femer entlang der weiteren Wandabschnitte 29. Zur Befestigung der Stütze durch Schweißen ist es also möglich, ohne Unterbrechung an jeder der beiden Seiten der Stütze eine einzige, lange Schweißnaht zu ziehen.

Die Stütze ist symmetrisch im Bezug auf Ihre Mittelebene gestaltet. Sie ist an beiden Seitenwänden mit den Schweißkanten 17 mit angeformter Nut 18 zur Aufnahme der sich beim Schweißen einstellenden Aluminiumschmelze versehen. An den Steg 16 läßt sich ein auf den Zeichnungen nicht dargestellter Querträger anschweißen, der die Stütze mit der jeweils anderen Stütze auf der anderen Fahrzeug-Längsseite verbindet.

### Bezugszeichenliste

- 2: Schwenkachse
- 4: Seitenwand
- 5: Seitenwand
- 6: vordere Stirnwand
- 7: obere Stirnfläche
- 8: Schweißkanten,
- 9a: Flanschfläche, Anschlußflansch
- 9b: Flanschfläche, Anschlußflansch
- 10: Versteifungsrippe
- 11: Buchse
- 16: Steg
- 17: Schweißkante
- 18: Nut
- 19: Auge
- 20: Öffnung
- 21: Stahlbuchse
- 22: Flansch
- 23: Strebe
- 24: Außenrand
- 25: Schweißkante
- 26: Schweißkante
- 27a: Einbuchtung
- 27b: Einbuchtung
- 28: Wandabschnitt
- 29: Wandabschnitt
- 30: Durchgangsbohrung
- 31: Mittelachse der Durchgangsbohrung

## Patentansprüche

1. Stütze zur Ableitung der Achskräfte einer Fahrzeugachse und insbesondere einer Lkw-Anhängerachse auf einen statisch übergeordneten Fahrzeug-Längsträger, an dessen Unterseite die Stütze befestigt ist, wobei die Stütze eine an den Fahrzeugrahmen ansetzbare obere Stirnfläche (7) und zwei Seitenwände (4, 5) aufweist,
**dadurch gekennzeichnet,**
**daß** die Stütze ein einstückiges Aluminium-Gußteil mit daran angeformten Anschlußflanschen (9a, 9b) zur Befestigung unter dem Fahrzeugrahmen ist, und daß sich die an ihren Außenrändem (24) Schweißkanten (8) aufweisenden Anschlußflansche (9a, 9b) in Einbuchtungen (27a, 27b) befinden, mit denen die Seitenwände (4, 5) im Übergang zu der oberen Stirnfläche versehen sind.

2. Stütze nach Anspruch 1, **dadurch gekennzeichnet, daß** an deren Seitenwand (4) eine Schweißkante (17) angeformt ist.

3. Stütze nach Anspruch 1, **dadurch gekennzeichnet, daß** an dieser mindestens eine Versteifungsrippe (10) angeformt ist.

4. Stütze nach einem der Ansprüche 1 bis 3, **dadurch gekennzeichnet, daß** die Schweißkanten (8) zur Verbindung der Stütze mit dem Fahrzeugrahmen an sich in Fahrtrichtung erstreckenden Rändern der Anschlußflansche (9a, 9b) ausgebildet sind.

5. Stütze nach Anspruch 1, **dadurch gekennzeichnet, daß** die Schweißkanten (8) auf jeder Seite der Stütze durchgehend ausgebildet sind und sich entlang der Außenränder der Anschlußflansche (9a, 9b) und zusätzlich entlang der zwischen aufeinanderfolgenden Anschlußflanschen (9a, 9b) liegenden Wandabschnitte (28) der Seitenwände (4, 5) erstrecken.

6. Stütze nach einem der vorangehenden Ansprüche, **dadurch gekennzeichnet, daß** Ober- und Unterseite jedes Anschlußflansches (9a, 9b) parallel zueinander sind.

7. Stütze nach einem der vorangehenden Ansprüche, **dadurch gekennzeichnet, daß** die Seitenwände (4, 5) symmetrisch in Bezug auf die Mittelebene der Stütze gestaltet sind.

8. Stütze nach einem der vorangehenden Ansprüche, **gekennzeichnet durch** zueinander fluchtende Öffnungen (19) in beiden Seitenwänden (4, 5), in die Stahlbuchsen (21) eingesetzt sind, die ein Drehlager (2) für die vordere Anlenkung eines mit der Fahrzeugachse verbundenen Längslenkers (3) aufnehmen.

9. Stütze nach einem der vorangehenden Ansprüche, **dadurch gekennzeichnet, daß** deren Querschnitt, in einer horizontalen Schnittebene betrachtet, U-förmig mit zwei Seitenwänden (4, 5) und einer in Fahrtrichtung weisenden geschlossenen vorderen Stimwand (6) ist.

10. Stütze nach einem der vorangehenden Ansprüche, **gekennzeichnet durch** eine die beiden Seitenwände (4, 5) verbindende Strebe (23), die ebenfalls einstückiger Bestandteil des Aluminium-Gußteils ist.

## Claims

1. Support for diverting the forces of a vehicle axle, and in particular of a lorry trailer axle, to a statically more important vehicle side rail, on the underside of which the support is fastened, the support having a top end surface (7) which can be attached to the vehicle frame, and two side walls (4, 5), **characterized in that** the support is a single-piece aluminium casting with integrally formed connection flanges (9a, 9b) for fastening beneath the vehicle frame, and **in that** the connection flanges (9a, 9b), which have weld edges (8) on their outer borders (24), are located in indents (27a, 27b) with which the side walls (4, 5) are provided at the transition to the top end surface.

2. Support according to Claim 1, **characterized in that** a weld edge (17) is integrally formed on its side wall (4).

3. Support according to Claim 1, **characterized in that** at least one stiffening rib (10) is integrally formed on it.

4. Support according to one of Claims 1 to 3, **characterized in that** the weld edges (8), for connecting the support to the vehicle frame, are formed on borders of the connection flanges (9a, 9b) which extends the direction of travel.

5. Support according to Claim 1, **characterized in that** the weld edges (8) are formed continuously on each side of the support and extend along the outer borders of the connection flanges (9a, 9b) and, in addition, along the wall sections (28) of the side walls (4, 5), said wall sections being located between successive connection flanges (9a, 9b).

6. Support according to one of the preceding claims, **characterized in that** the top side and underside of each connection flange (9a, 9b) are parallel to one another.

7. Support according to one of the preceding claims, **characterized in that** the side walls (4, 5) are configured symmetrically in relation to the centre plane of the support.

8. Support according to one of the preceding claims, **characterized by** mutually aligned openings (19) in two side walls (4, 5), into which there are inserted steel bushings (21) which accommodate a rotary bearing (2) for the front articulation of a longitudinal link (3) connected to the vehicle axle.

9. Support according to one of the preceding claims, **characterized in that** its cross section, as seen in a horizontal section plane, is U-shaped with two side walls (4, 5) and a closed front end wall (6) oriented in the direction of travel.

10. Support according to one of the preceding claims, **characterized by** a strut (23) which connects the two side walls (4, 5) and is likewise an integral constituent part of the aluminium casting.

## Revendications

1. Support pour dévier les forces d'un essieu, et en particulier d'un essieu de remorque de poids lourd, vers un longeron statiquement supérieur du véhicule automobile, sur la face inférieure duquel est fixé le support, le support comprenant une surface frontale supérieure (7) susceptible d'être appliquée contre le châssis du véhicule et deux parois latérales (4, 5), **caractérisé en ce que** le support est une pièce de fonderie en aluminium d'un seul tenant avec des brides de raccordement (9a, 9b) conformées sur celle-ci pour la fixation au-dessous du châssis du véhicule, et **en ce que** les brides de raccordement (9a, 9b), qui présentent des arêtes de soudage (8) au niveau de leurs bords extérieurs (24), se trouvent dans des creux (27a, 27b) dont sont pourvues les parois latérales (4, 5) dans la transition vers la surface frontale supérieure.

2. Support selon la revendication 1, **caractérisé en ce qu'**une arête de soudage (17) est conformée sur sa paroi latérale (4).

3. Support selon la revendication 1, **caractérisé en ce qu'**au moins une nervure de rigidification (10) est conformée sur celui-ci.

4. Support selon l'une quelconque des revendications 1 à 3, **caractérisé en ce que** les arêtes de soudage (8) destinées à la liaison du support avec le châssis de véhicule sont réalisées sur des bords des brides de raccordement (9a, 9b) dirigés en direction de roulement.

5. Support selon la revendication 1, **caractérisé en ce que** les arêtes de soudage (8) sont réalisées en continu sur chaque côté du support et s'étendent le long des bords extérieurs des brides de raccordement (9a, 9b) et en supplément le long des tronçons de paroi (28) des parois latérales (4, 5) situés entre les brides de raccordement successives (9a, 9b).

6. Support selon l'une quelconque des revendications précédentes, **caractérisé en ce que** la face supérieure et la face inférieure de chaque bride de raccordement (9a, 9b) sont parallèles l'une à l'autre.

7. Support selon l'une quelconque des revendications précédentes, **caractérisé en ce que** les parois latérales (4, 5) sont réalisées symétriquement par rapport au plan médian du support.

8. Support selon l'une quelconque des revendications précédentes, **caractérisé par** des ouvertures (19) en alignement mutuel dans les deux parois latérales (4, 5), dans lesquelles sont introduites des douilles d'acier (21) qui reçoivent un palier de rotation (2) pour l'articulation avant d'un bras longitudinal (3) relié à l'essieu du véhicule.

9. Support selon l'une quelconque des revendications précédentes, **caractérisé en ce que** sa section transversale, vue dans un plan de coupe horizontal, est en forme de U avec deux parois latérales (4, 5) et avec une paroi frontale avant refermée (6) dirigée en direction de roulement.

10. Support selon l'une quelconque des revendications précédentes, **caractérisé par** une entretoise (23) reliant les deux parois latérales (4, 5), qui est également un composant d'un seul tenant de la pièce de fonderie en aluminium.
